Europäisches Patentamt

**European Patent Office**

Office européen des brevets

(11) Publication number: **0 404 961 B1**

# EUROPEAN PATENT SPECIFICATION

(45) Date of publication of patent specification: **28.06.95**

(51) Int. Cl.6: **D04H 1/42**, D04H 1/54, D06M 11/83

(21) Application number: **89913174.2**

(22) Date of filing: **05.12.89**

(86) International application number: **PCT/JP89/01219**

(87) International publication number: **WO 90/06388 (14.06.90 90/14)**

(54) **METALLIC FIBER NON-WOVEN FABRIC AND ITS PRODUCTION METHOD.**

(30) Priority: **05.12.88 JP 308582/88**

(43) Date of publication of application:
**02.01.91 Bulletin 91/01**

(45) Publication of the grant of the patent:
**28.06.95 Bulletin 95/26**

(84) Designated Contracting States:
**DE FR GB NL**

(56) References cited:
JP-A- 5 155 427          JP-A-53 139 872
JP-A-63 152 462          JP-A-63 182 461
JP-B- 4 929 817          US-A- 4 534 886

DATABASE WPIL,no.82-32421E Derwent Publication Ltd,London,GB,&JP-A-57015517(MATSUSHITA ELEC IND.K.K)

(73) Proprietor: **OSAKA GAS COMPANY LIMITED**
**1-2 Hiranomachi 4-chome,**
**Chuo-ku**
**Osaka-shi,**

Osaka 541 (JP)

Proprietor: **NIPPON SEISEN CO., LTD.**
**2-7 Koraibashi 4-chome**
**Chuo-ku**
**Osaka-shi**
**Osaka 541 (JP)**

(72) Inventor: **NISHIDA, Shigeo Nippon Seisen Co., Ltd.**
**17-1, Ikenomiya 4-chome**
**Hirakata-shi**
**Osaka 573 (JP)**
Inventor: **NAGAI, Kiyoshi Nippon Seisen Co., Ltd.**
**17-1, Ikenomiya 4-chome**
**Hirakata-shi**
**Osaka 573 (JP)**

(74) Representative: **Türk, Gille, Hrabal, Leifert**
**Brucknerstrasse 20**
**D-40593 Düsseldorf (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

FIELD OF THE INVENTION

The present invention relates to a metallic fiber nonwoven cloth usable in filter, battery electrode material or the like, and its manufacturing method.

BACKGROUND OF THE INVENTION

Metallic fiber nonwoven cloth entangling metallic fibers is widely used in filter, battery electrode material, vibration-proof and sound-proof applications and many others, therefore the metallic fiber non-woven cloth is intensively researched and developed.

For example, the Japanese Patent Publication No. 42-13077 discloses a method of efficiently manufacturing a sintered filter material by heating and pressurizing metallic fibers simultaneously. Or the Japanese Patent Publication No. 54-42703 unveils a metallic fiber having a square cross section.

These metallic fiber nonwoven cloths are, however, manufactured by integrating metallic fibers by sintering, and therefore, the length of the bonding portion for bonding metallic fibers is short. Besides, in this bonding portion, as shown in Fig. 9 schematically, a notched outer surface (a) being sharp toward the bonding portion is formed, and the bonding strength is impaired by the notch effect, and the strength of the obtained metallic fiber nonwoven cloth is not enough. Especially in the latter disclosure using square section fibers, the bonding portion is substantially a point contact, and the outer surface (a) at the junction shown in Fig. 9 is further pointed and sharp, and the bonding strength drops, and therefore when such sinter is used in a place exposed to effects of pressure, a reinforcing material is needed, and the applications are limited.

Generally, in metallic fiber nonwoven cloth, those having high voids are often desired, but when bonding by sintering, since the bonding strength is inferior, it is hard to manufacture at voids of over 90%. If dared to manufacture, handling is very difficult, and the cloth is not practicable. For example, by the method disclosed in the 54-42703 patent, products with voids of only 40 to 80% are manufactured.

Furthermore, the Japanese Patent Publication No. 49-29817 discloses a method of manufacturing fibrous metal material for removing skeletal fibers by oxidizing at high temperature after covering skeletal fibers containing carbon with metal such as nickel in a plating solution.

In this method, however, (1) since the fibers are fixed by co-diffusion bonding at contact point by high temperature oxidation, only the fibers short In the length of bonding portion can be manufactured, and the bonding strength is inferior. (2) In order to increase the length of the bonding portion, the thickness of metal coating must be extremely increased, and the other parts than the bonding portion becomes unnecessarily thick and it is not economical, and the flexibility of the obtained nonwoven cloth is lowered. There are other problems to be solved.

The Japanese Laid-open Patent No. 51-55427 discloses a method of manufacturing metal fibers having a core material by plating with metal while unraveling the skeletal fibers in plating solution in order to plate uniformly. In this method, too, the problems of the 49-29817 patent are not solved.

The Japanese Laid-open Patent No. 63-152462 discloses a method of forming a cathode electrode in a comb shape and inserting from above the felt, and supplying electrolyte solution from beneath, so as to plate the center of the felt also sufficiently, when plating carbon fiber felt with nickel. The metallic fiber felt obtained by this method is, again, not sufficient in the bonding portion strength of the metallic fibers, and long-length products are not obtained because of the batch process.

The EP-A-0 264 771 (D1) discloses a non-woven fiber mat comprising a multiplicity of electrocoatable fibers (A), such as carbon fibers, a fibrillated fiber binder (B), such as acrylic fiber, which contacts said electrocoatable fibers (A), and a substantially uniform metallic overcoat covering said electrocoatable fibers (A) at least partially incorporating within said overcoat said binder at the sites where said binder contacts said electrocoatable fibers. The mat of D1 is manufactured by metal plating on the mat made from a mixture comprising said electrocoatable fibers (A), a fibrillated fiber binder (B) and suspending liquid. The nonwoven fiber mat has solid electrocoatable fibers (A) therein and no hollow parts. The solid electrocoatable fibers (A) of the nonwoven fiber mat are mutually bonded by fibrillated fiber binder (B), such as acrylic fiber and not by metallic portions.

The US-A-4 169 911 discloses a porous carbon fiber material comprising a multiplicity of cut carbon fibers having a diameter of 3 to 20 $\mu$m; a resin binder which contacts said fibers (A) at their contacting points of intersection, and a thin film covering each of said fibers. The material is manufactured by metal plating on the feltlike material of carbon fibers bonded by the binder. Although the porous material is mutually bonded by a resin binder, the manufacturing process has no step of "providing electrical conductivity for at least the surface of the bonding agent at each of the plurality of bonding points". Therefore, the thin metal film of porous material only covers each of said fibers and it is difficult to cover the bonding portions of resin, having no electrical conductivity.

US-A-3 695 869 discloses a method of preparing a fibrous metal material comprising a step of preparing an electrically conductive carbon skeleton, a step of depositing on said skeleton a metall or alloy and a step of eliminating said skeleton by oxidation at a high temperatur of at least 500 °C, leaving the deposited metal or alloy only, in said fibrous form. The carbon fibers are not joined each other by a binder, but the metal fibers are bonded each other by e.g. sintering especially after the metal plating on the fibers, not on the feltlike material. Therefore the material is less strong at the bonding portions and if it becomes necessary to increase the bonding strength and thereby the length of the bonding portions at the bonding points in the material the amount of metal plating has to be increased. As the result the thickness of the plating may become excessive.

The invention is hence intended to present a metallic fiber nonwoven cloth having high voids and excellent in bonding strength of metallic fibers, and its manufacturing method.

DISCLOSURE OF THE INVENTION

The invention relates to a nonwoven cloth made of metallic fibers comprising a plurality of metallic fibers, each said metallic fiber having a hollow part extending therethrough, wherein the outer circumference of said metallic fibers being substantially smooth, the mean diameter (D) of said metallic fibers being 50 $\mu$m or less, and the thickness (T) of said metallic fibers being 0,05 to 0,4 times the mean diameter (D) of the metallic fibers,

said metallic fibers being mutually bonded by metallic bonding portions made of the same metallic material as said metallic fibers, the outer surface of said metallic bonding portions being smoothly curved arc-shaped and the length of the metallic bonding portions being 0,7 to 2 times said mean diameter (D) of said metallic fibers,

said metallic fibers having communicating portions which communicate between the hollow parts of the metallic fibers, where said metallic fibers are intersecting, and

the carbon content of said nonwoven cloth made of metallic fibers being 0,1 weight % or less.

Thus, in the invention, since the length of the metallic bonding portion is long, the bonding strength of metallic fibers is great. Therefore, the cloth is excellent in shape retaining ability, and can withstand thermal distortion and deforming stress by processing. Besides, when the voids are set very high, for example, over 95%, the same properties may be maintained. Furthermore, the surface of the bonding portion is smooth, and clogging may be prevented when used as filter or the like. The voids are determined in the formula of 100 x (W/$\gamma$)/V, where V is the volume of product, W is the weight of product, and $\gamma$ is the true density of product.

In the invention, since the metallic fibers are hollow, the weight is reduced and the voids are raised.

The invention relates further to a method of making a nonwoven metallic fiber cloth, comprising the steps of

bonding carbon fibers mutually by a bonding agent to form a nonwoven carbon fiber cloth having a plurality of bonding points at which the adjacent carbon fibers are mutually bonded by the bonding agent, said carbon fibers having a mean diameter in the range of not more than 40 $\mu$m,

providing electrical conductivity for at least the surface of the bonding agent at each of said bonding points,

electroplating the nonwoven carbon fiber cloth with a metal to form a metallic layer on the surface of each said carbon fiber inclusive of the surface of the bonding agent at each bonding point to thereby form a nonwoven metallic-coated carbon fiber cloth in which

the mean diameter (D) of the metallic-coated carbon fibers is not more than 50 $\mu$m, the thickness of the metallic layers is in the range of from 0,05 to 0,4 times said mean diameter (D), and the outer metallic surfaces of the adjacent fibers are mutually connected at each bonding point by the smoothly curved metallic surface of the bonding point, and

reducing the carbon content of said nonwoven metallic-coated carbon fiber cloth to not more than 0,1 weight% by heating said nonwoven metallic-coated carbon fiber cloth in air or alternatively in an oxidizing gas atmosphere to form the nonwoven cloth of mutually bonded tubelike metallic fibers.

In one prefered embodiment of this method said metal is Nickel. In another prefered embodiment of this method said bonding agent is made of at least one resin selected from the group consisting of epoxy resin, PVA resin and polyester resin.

In a still other prefered embodiment of this method said method further comprises a step of annealing the non-woven cloth of mutually bonded tubelike metallic fibers in a reducing atmosphere.

According to the constitutions of the invention, (1) since the core materials are preliminarily bonded with bonding materials so as to retain the form of nonwoven cloth, the core materials are formed by bonding materials, and the core material nonwoven cloth is formed by mutually bonding with core material bonding portions having a smoothly curved concave arc-shaped outer surface, the length of the metallic bonding portions obtained by metallic coating is large and the number of bonding portions may be increased. Accordingly, the strength of the obtained metallic fiber nonwoven cloth may be enhanced. (2) Even if the thickness of the metallic coating layer is small by the core material bonding portions, metallic bonding portions of a smooth concave arc-shape may by obtained. (3) In the method of the invention for removing the core materials, a metallic fiber nonwoven cloth with high voids, for example, 97% may be easily obtained, and the bonding strength of the metallic fibers is great, and hence when used as the electrode material for battery, a battery of large capacity will be obtained. (4) Because of use of core material nonwoven cloth preliminarily bonded with bonding material, as compared with the conventional method of sintering to make into one body after once making into felt, changes and fluctuations of characteristics (tensile strength, voids, thickness, true density, etc.) due to handling are small, and products of stable quality will be obtained by simple facilities and processes. (5) When coating with metal is effected by plating or other metal coating method, the continuous process is possible, and long metallic fiber nonwoven cloths will be obtained.

## BRIEF DESCRIPTION OF THE DRAWINGS

Fig. 1 is a microscopic photograph showing the appearance of one of the embodiments of metallic fiber nonwoven cloth;

Fig. 2 is a microscopic photograph magnifying the bonding state of metallic fibers;

Fig. 3 (a) is a partially cut-away perspective view showing an embodiment of metallic fiber nonwoven cloth of the invention;

Fig. 3 (b) is a partially cut-away perspective view showing other embodiment of the invention;

Fig. 4 (a) is a partially cut-away perspective view showing an embodiment of metallic fiber nonwoven cloth having core materials inside;

Fig. 4 (b) is a partially cut-away perspective view showing other embodiment of metallic fiber nonwoven cloth having core material inside;

Fig. 5 is a perspective view showing an example of core material nonwoven cloth;

Fig. 6 is a diagram showing an example of process of an embodiment of the invention;

Fig. 7 is a sectional view schematically showing the measuring method of bending test;

Fig. 8 is a sectional view showing an example of bonding portion obtained by further sintering the hollow metallic fiber nonwoven cloth; and

Fig. 9 is a sectional view showing an example of bonding portion of metallic fiber nonwoven cloth manufactured by sintering method by the prior art.

## DESCRIPTION OF THE PREFERRED EMBODIMENTS

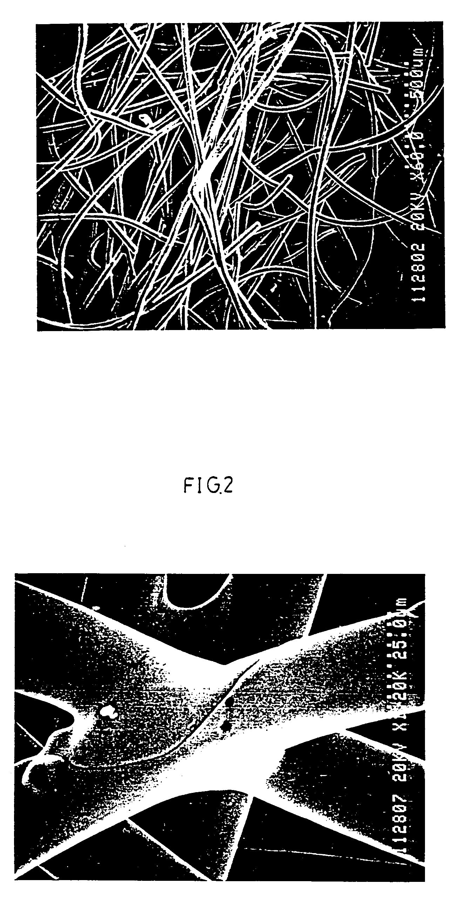

A metallic fiber nonwoven cloth 1 of the invention is as shown in Figs. 1 to 3, in which hollow metallic fibers 2 having substantially a smooth outer surface and the mean diameter D of not more than 50 $\mu$m are mutually bonded by a metallic bonding portion 3 made of the same metallic material as the metallic fiber 2 and having a smoothly curved concave arc-shaped outer surface 6, and the length L of the metallic bonding portion 3 is 0.7 to 2 times the mean diameter D of the metallic fibers 2.

Here, the substantially smooth state of the outer surface means that the surface is almost free from protrusions, especially fine pointed protrusions.

The mean diameter D refers to the average of the maximum diameter and minimum diameter at a specific position of the metallic fibers 2, and it is determined by measuring at several positions and averaging. The mean diameter D of the metallic fibers 2 should be 50 $\mu$m or less, preferably 5 to 40 $\mu$m, or more preferably 7 to 30 $\mu$m. If less than 5 um, it is difficult to manufacture, and if more than 50 $\mu$m, the specific surface area decreases and the voids cannot be increased, while the flexibility of the nonwoven cloth 1 itself drops.

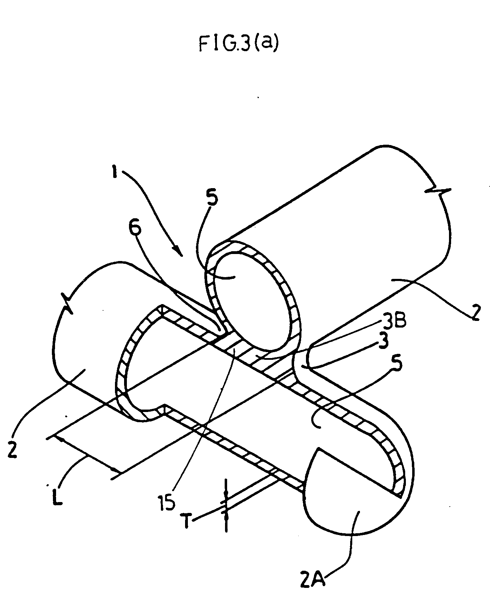

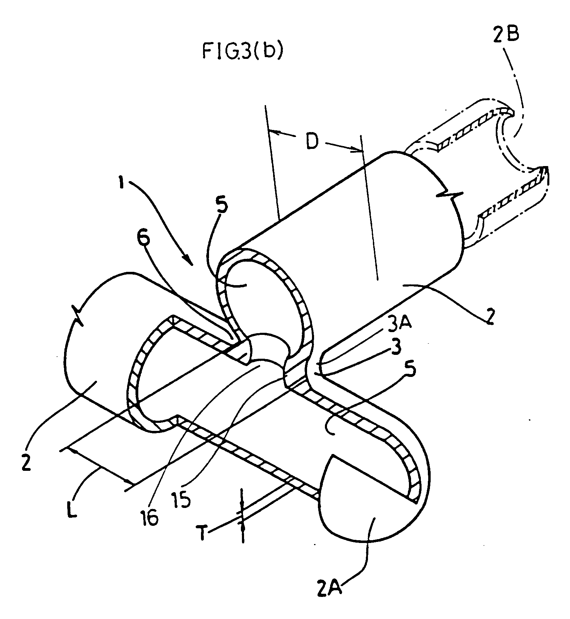

The metallic fibers 2 are made of hollow materials as stated above, and the hollow part 5 extends over the whole length. At the metallic bonding portion 3 where the metallic fibers 2, 2 intersect, the hollow part 5 comprises, as shown in Fig. 3 (a), a communicating part 3A to communicate with the hollow part 5 of the

4

EP 0 404 961 B1

other metallic fiber 2 bonded through a conducting part 16 passing through a partition wall 15 between the metallic fibers 2, 2, and a separating part 3B mutually separated by the partition wall 15 as shown in Fig. 3 (b), and the communicating part 3A and separating part 3B occasionally coexisting the metallic fiber nonwoven cloth 1. Meanwhile, the communicating part 3A is produced as a result of removal of the core material bonding portion 12 mainly as stated below in the manufacturing method, and therefore the metallic bonding portion 3 is in most cases the communicating part 3A in the metallic fiber nonwoven cloth 1.

The metallic bonding portion 3 has, as shown in Figs. 2, 3 a smoothly curved concave arc-shaped outer surface 6, and the length L of the metallic bonding portion 3 which is the length between the outer surfaces 6, 6 is formed relatively long. The length L of the metallic bonding portion 3 is defined, as shown in Figs. 3 (a), (b), as the minimum length within the distance of the opposing arc-shaped outer surfaces 6, 6 of the bonding portion, across the middle position of the line segment connecting the intersecting metallic fibers 2, 2 in the shortest distance, regardless of the presence of the conducting part 16. The length L is 0.7D to 2D of the mean diameter D of the metallic fibers 2, and preferably 0.8 to 2D, or more preferably 1 to 1.5D. If less than 0.7D, the outer surface 6 of the bonding portion becomes a sharp concave shape, and the bonding strength is lowered by the notch effect. It is not necessary to set larger than 2D. The metallic fiber nonwoven cloth 1 should have the length L in at least 30% of the whole metallic bonding portions 3, or preferably 50% or more, or more preferably 70% or more thereof. Consequently, the bonding strength of the metallic fiber nonwoven cloth 1 is enhanced. The arc-shaped outer surfaces 6 should have a radius of curvature nearly same as or more than the outer surfaces of the metallic fibers 2, for example, in order to prevent crack or peeling due to concentration of notch stresses of the bonding portions 3.

The thickness T of the metallic fibers 2 is 0.05 to 0.4D of the mean diameter D, or more preferably 0.1 to 0.3D. If exceeding 0.4D, the thickness is excessive, which is generally unnecessary. For example, when used as the electrode material of Ni-Cd battery, if the mean diameter D of the metallic fibers 2 is 10 to 30 $\mu$m, the thickness T should be preferably about 3 to 7 $\mu$m. If less than 1 $\mu$m, the strength is inferior, and handling is difficult.

Furthermore, in the metallic fibers 2, aside from the closed end 2A closed with a spherical head as shown in Fig. 3 (a), an open end 2B being open as indicated by single dot chain line may be formed, and generally as the thickness T decreases, the rate of the open ends 2B increases. The metallic fiber nonwoven cloth 1 is generally used as being cut in a desired shape, and this cut end is an open end 2B usually. Such open end 2b cooperates with the conducting part 16 to contribute to discharge of impurities in the hollow part 5.

As the material for the metallic fibers 2, aside from noble metals such as nickel, chromium, aluminum, copper, zinc, platinum and palladium, alloys containing one of them may be used depending on applications. In particular, materials containing nickel are excellent in strength, heat resistance and corrosion resistance, and may be used widely.

The metallic fiber nonwoven cloth 1, as the metallic bonding portion 3 has a sufficient length L and smoothly curved concave arc-shaped outer surface 6, may enhance the strength of the bonding portion, as compared with the conventional nonwoven cloth having the metallic fibers bonded by diffusion junction. What is more, by raising the voids, the strength and shape retaining property are improved. Moreover, subsequent processing accompanied by deformation is easier, and when used as battery electrode material, for example, filling work of active substance is easy, and a high filling rate is realized. When used as filter, meanwhile, since the outer circumference of the metallic fibers 2 and the outer surface 6 of the metallic bonding portions 3 are smooth, clogging and other troubles due to deposit of foreign matter in the treating solution in the bonding portions 3 may be prevented.

Besides, since the metallic fibers 2 are hollow, discharge of internal impurities is easy, and the weight may be reduced, and by increasing the surface area by unit weight, the performance may be enhanced. According to the invention, it is possible to produce at voids of about 97%.

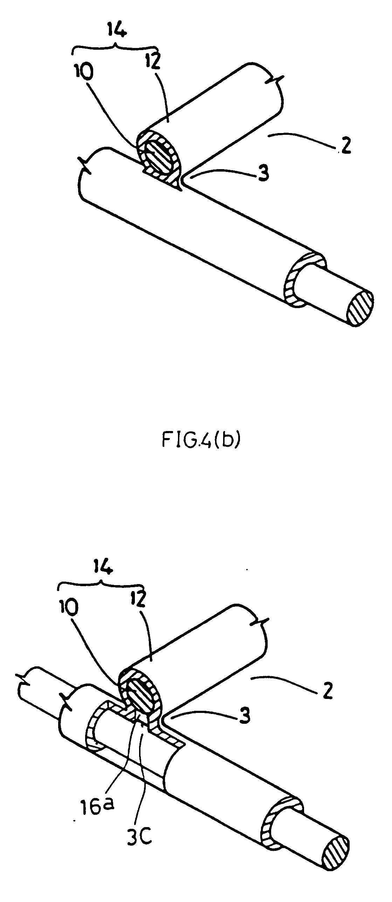

Metallic fibers 2 having core materials 10 in the inside as shown in Figs. 4 (a), (b), and compound materials 14 are formed by the metallic fibers 2 and internal core materials 10.

Since the length L of the metallic bonding portions 3 is sufficient, the bonding strength of the metallic fibers 2, 2 is great, and therefore the product is excellent in the shape retaining property and can withstand thermal strain and deformation stress due to processing, while the above properties are maintained by raising the voids. Still more, the surface of the bonding portions is smooth, and clogging may be prevented when used as filter, and moreover, because of the internal core materials, the stiffness of the metallic fibers is increased and the product strength is improved, so that the shape retaining property and stability of dimensions and shapes are enhanced.

As the core material 10, carbon fibers, organic fibers having the surface treated for conductivity, other conductive fibers, and also nonconductive fibers may be also used. In particular, when it is desired to

5

reduce the weight and increase the strength of nonwoven cloth 1, carbon fibers should be preferably used. The fiber diameter of core material 10 should be about 40 $\mu$m, and be selected depending on the applications.

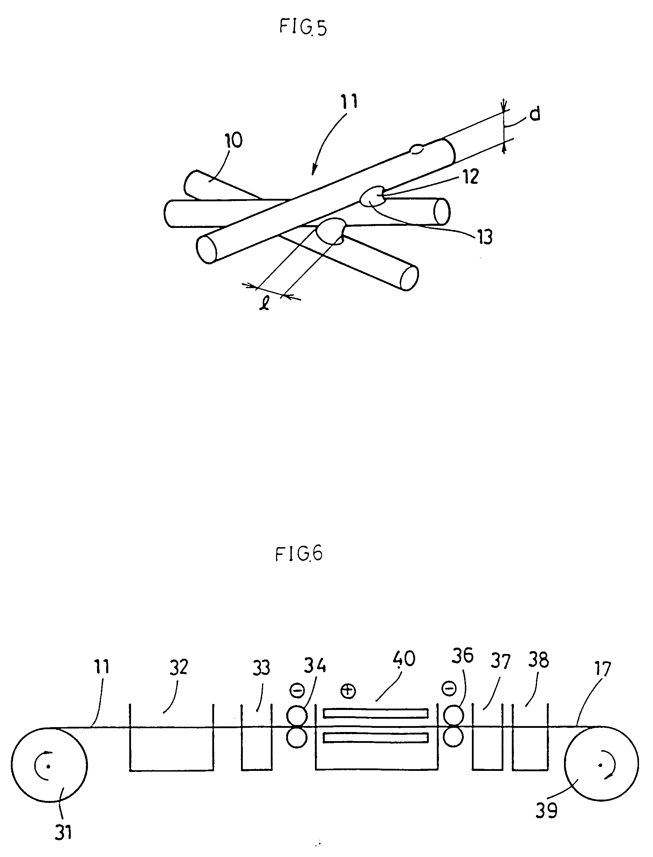

Furthermore, the core material 10 is preliminarily bonded by using bonding material as shown in Fig. 5, and a core material nonwoven cloth 11 Is formed. This bonding material forms a core material bonding portion 12 bonding the core material 10 at the intersection. The bonding material, owing to its affinity for the core material 10 and surface tension, may be adhered to the core material 10 only at the Intersection. It may also deposit sparingly on the whole surface of the core material 10, or it may also remain in drop forms. The core material bonding portion 12 has a smooth outer surface 13, and it can bond the core material 10 whether in contact state or in separate state.

As the bonding material, for example, thermosetting resins such as epoxy resin and phenol resin, and thermoplastic resins such as PVA and polyester may be used. Above all, the epoxy resin is preferred because of its large viscosity and excellent bonding strength. This resin is inexpensive, and is eliminated by heating.

Furthermore, the metallic fiber nonwoven cloth 1 may also contain, aside from the separating part 3B separating the metallic fibers 2 from the partition wall 15 as shown in Fig. 4 (a), a cavity coupling part 3C having independent cavities 16a passing through the partition wall 15 as shown in Fig. 4 (b). Such cavities 16a are considered to be formed mainly when the bonding material is decomposed by heating, and is released to outside through the metallic fibers 2.

In the core material bonding part 12, moreover, the length $\ell$ of the bonding portion (defined same as in the metallic bonding portion 3) is set preferably at 0.5 times the diameter d of the core material 10, and more preferably 0.7 times or more. As a result, the length L of the metallic bonding portion 3 may be extended.

The manufacturing method of metallic fiber nonwoven cloth with core materials, comprises the following steps.

(a) A step of obtaining a metallic coated core material nonwoven cloth 17 by forming a metallic coated layer by metal coating method on the surface of a core material nonwoven cloth 11 forming core materials 10 with the mean diameter d of 40 $\mu$m or less by bonding material, and bonding mutually with core material bonding portions 12 having a smooth outer surface 13.

(b) A step of obtaining a metallic fiber nonwoven cloth made of metallic fibers 2 possessing core materials 10 inside and bonded by metallic bonding portions 3, by annealing the metallic coated core material nonwoven cloth 17.

The material for the core material 10 is selected depending on the metal coating method, and for example when coating by electroplating method, carbon fibers and other conductive fibers, especially pitch series carbon fibers are preferred because they are excellent in conductivity and strength, and easy in formation of core material nonwoven cloth 11. Depending on the coating method, nonconductive fibers may be also used, or different fibers may be mixed.

When using organic fibers as the core material 10, as the conductive treatment method, for example, electroless metal plating and deposition method may be employed.

The diameter d of the core material 10 is 40 $\mu$m or less, or preferably 5 to 20 um, in order to increases the strength of the core material nonwoven cloth 11 while keeping high voids. If larger than this, the flexibility is inferior, and if less than 5 $\mu$m, it is not desired from the viewpoint of production efficiency. Furthermore, the core material 10 should have a length of about, for example, 3 to 50 mm. In the core material nonwoven cloth 11, multiple core materials 11 criss-cross randomly, and the intersections of core materials 10 are bonded by the core material bonding portions 12 using bonding materials, thereby composing the core material nonwoven cloth 11.

Such core material nonwoven cloth 11 is obtained, for example, by the immersion method of dipping an unbonded nonwoven cloth in a liquid bonding material, or spray method of spraying the bonding material to the webs of the core material 10. By such methods, the bonding material may be easily formed only at the intersections by the surface tension. The bonding material is dried by a proper method.

Thus, since the core material nonwoven cloth 11 preliminarily bonding the core material 10 by using bonding material is used, handling is easy, and the number of intersections increases, and the length of bonding may be extended.

The thickness and loadings of the core material nonwoven cloth 11 are selected depending on the characteristics of the final product, but if excessively thin, the shape retaining ability of the core material nonwoven cloth is inferior, or if too thick, uniform metallic coating layer can be hardly formed deeply to the inside of the nonwoven cloth. Therefore, the thickness should be about 0.5 to 5 mm, preferably 1 to 3 mm.

A metallic coating layer is formed on the surface of such core material nonwoven cloth 11, and the metallic coated core material nonwoven cloth 17 Is obtained.

As the metallic coating method, for example, plating method, immersion method and deposition method may be employed, and the electroplating method is particularly preferable because the efficiency is excellent and a metallic coating layer of uniform thickness may be formed. At this time, it is preferable to perform conductive treatment as the pretreatment in order to enhance the conductivity of the core material 10 and the bonding material.

Fig. 6 shows an example of an apparatus for continuously plating with nickel by electroplating method, and a long core material nonwoven cloth 11 is sequentially supplied from an uncoiler 31, and is provided with a catalyst in order to enhance the conductivity in a pretreatment tank 32. It then passes through a water washing tank 33, and a voltage is applied to a first current feed roll 34, a second current feed roll 36 downstream of electroplating tank 40, and nickel anode pole of electroplating tank 40, and nickel plating is formed on the surface of the core material nonwoven cloth 11. Afterwards, passing through the water washing tank 37 and drying part 38, it is taken up on a recoiler 39, and a metallic coated core material nonwoven cloth 17 is obtained. In this case, as electrolyte solution, nickel sulfate, nickel chloride or nickel sulfamate may be used, and the core material is treated in the condition of current density of about 1 to 15 A per 1 $dm^2$ of surface area and duration of 1 to 30 minutes.

In the case of chemical plating, for example, after deposing catalyst on the core material nonwoven cloth, it is immersed in aqueous solution containing plating metal ions. By a known deposition method, too, the metallic coating layer may be formed.

In such manner, a metallic coating layer of nearly uniform thickness is formed on the surface of the core material nonwoven cloth 11. Therefore, since a metallic coating is also formed on the surface of the core material bonding portion 12, the metallic bonding portion 3 may come to have a smoothly curved concave arc-shaped outer surface 6 along the core material bonding portion 12.

The step (b) is an annealing process for providing such metallic coated core material nonwoven cloth 17 with a flexibility. Annealing is intended to enhance the flexibility and durability by recrystallizing by heating the material.

As the annealing condition, when the metal is nickel, it is heated about 1 to 30 minutes at 800 to 1200 deg. C in a reducing atmosphere, and is then cooled gradually or quickly. When using copper, it is heated for 1 to 30 minutes at 450 to 600 deg. C, and is then cooled gradually, Depending on the material, annealing may be conducted in an oxidizing atmosphere.

As a result of such annealing, the bonding material may be eliminated as mentioned above depending on the conditions, and by this elimination, the metallic fiber nonwoven cloth having cavities 16a as shown in Fig. 4 (b) is obtained.

The metallic coated core material nonwoven cloth 17 may be used directly depending on the application or shape, and in such a case this metallic coated core material nonwoven cloth 17 may be used as the metallic fiber nonwoven cloth 1 shown in Fig. 4 (a).

The invention comprises, in the above step of (b) also a step for obtaining the metallic fiber nonwoven cloth 1 made of metallic fiber 2 having hollow metallic fibers 2 bonded by the metallic bonding portions 3 by heating the metallic coated core material nonwoven cloth 17 and removing the core material nonwoven cloth 11.

To remove the core material 10, it is heated in a gas atmosphere which reacts with the core material 10. For this reaction, it does not always mean direct reaction of the core material 10 and the gas. Through oxidation of the coating metal, it may directly react with the core material 10. For example, when the carbon fibers are used as the core material and nickel as the coating material, by heating in oxidizing gas atmosphere or in the air for 5 minutes to 4 hours at 600 to 1300 deg. C, the internal core material may by eliminated together with the bonding material, that Is, the core material nonwoven cloth 11 is eliminated.

As the oxidizing gas, a propane combustion gas in the following composition may be used.

| $CO_2$ | 12.5 Vol% | CO | 1.5 Vol% |
|--------|-----------|-----|----------|
| $H_2$ | 0.8 Vol% | $N_2$ | balance |

In this case, by heating for about 30 minutes to 1 hour at about 1100 to 1200 deg. C, or about 5 minutes to 2 hours at about 600 to 900 deg. C in the air, the carbon content in the nonwoven cloth is decreased to 0.1%. This condition varies with the combination of materials, or when the core material nonwoven cloth 11 disappears, only the metallic coating layer is left over to have a hollow part 5, and the metallic fiber nonwoven cloth 1 made of hollow metallic fibers 2 shown in Figs. 3 (a), (b) will be obtained.

When the heating process is done in an oxidizing atmosphere, the obtained nonwoven cloth may discolor, and to make the surface color metallic, it is desired to heat again in a reducing atmosphere. But this step may be skipped.

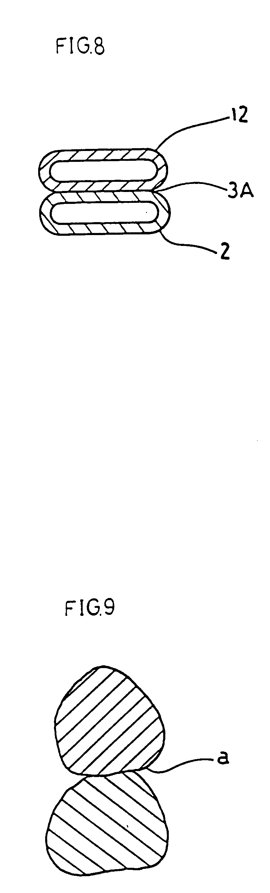

The metallic fiber nonwoven cloths manufactured by invention may be further enhanced in bonding portion strength by sintering, or adjusted in thickness by later process. As a result, the number of bonding portions and the contact surface area increase. Since the length L of the metallic bonding portion 3 obtained by coating is increased along with diffusion, and therefore the strength of the nonwoven cloth is further enhanced. If pressurized in later process, meanwhile, the hollow metallic fibers may be flattened as shown in Fig. 8. Besides, on the metallic fiber nonwoven cloth 1, at the time of sintering for adjustment of pore size or the like, mesh or fine powder made of other material, for example, similar or dissimilar metal as the nonwoven may be disposed inside or in the surface layer of the metallic fiber nonwoven cloth.

With the above constitutions, the invention bring about the following benefits.

(1) Since the core material is preliminarily bonded with bonding material so as to retain the form of nonwoven cloth, the core material is formed by the bonding material, and the core material nonwoven cloth is obtained by mutually bonding with the core material bonding portions having a smoothly curved concave arc-shaped outer surface, the metallic bonding portion length obtained by the metallic coating is large, and the number of bonding portions may be increased. Accordingly, the strength of the obtained metallic fiber nonwoven cloth may be enhanced.

(2) Even if the thickness of the metallic coating layer is small due to the core material bonding portion, metallic bonding portions of s smooth concave arc-shape may be obtained.

(3) According to the method of the invention for removing the core material, metallic fiber nonwoven cloth with voids of about 97%, for example, may be easily obtained, and since the bonding strength of metallic fibers is sufficient, a battery of high capacity will be obtained when used as the electrode material of battery.

(4) Because of the use of the core material nonwoven cloth preliminarily bonded with bonding material, changes and fluctuations of characteristics due to handling are small, and products of stable quality will be obtained by simple facilities and processes.

(5) When metal coating is effected by plating or similar metal coating method, continuous process is possible, and long metallic fiber nonwoven cloths may be obtained.

Examples

Example 1

A core material nonwoven cloth (a long product with loadings of 50 g/m$^2$, thickness of 2 mm, width of 230 mm) bonding pitch series carbon fibers with the fiber diameter of 13 $\mu$m and length of 6 mm by epoxy resin at intersections was prepared. Most of the intersections were bonded with the resin, on a smoothly curved concave or convex arc-shaped outer surface, and accordingly handling was very easy. To enhance the conductivity of the fibers, as pretreatment, the core material nonwoven cloth was dipped in an aqueous solution containing palladium chloride, tin chloride and hydrochloric acid for 30 seconds to 2 minutes as a preparation for nickel plating. Nickel plating was continuously conducted in a water bath containing 330 g/liter of nickel sulfate, 45 g/liter of nickel hydrochloride and 38 g/liter of boric acid, and the condition was current of 690 A and take-up speed of 0.1 m/min.

Thus obtained metallic coated core material nonwoven cloth had the characteristics of thickness of 2 mm, loadings of 550 g/m$^2$ and voids of 95.7%, and the thickness of the coating layer was 4.5 $\mu$m. However, this nonwoven cloth was brittle and inferior in flexibility, and it was further annealed at 900 deg. C for 20 minutes in cracking ammonia gas (H$_2$ : 75 vol.%, N$_2$ : 25 vol.%) (hereinafter called AX gas), thereby obtaining a metallic fiber nonwoven cloth leaving carbon fibers of core material inside the metallic fibers. As a result of investigation of the bonding portion of fibers, the majority was bonded with a smoothly curved arc-shaped outer surface and bonding length of 0.7 to 1.3D, and as a result of measurement of tensile strength of the sample by cutting the nonwoven cloth in a width of 2 cm, it was found to have 3.5 kg.

Example 2

The metallic coated core material nonwoven cloth before annealing obtained in Example 1 was heated in the air for about 30 minutes at 800 deg. C, and a hollow fiber nonwoven cloth removing the internal carbon fibers and bonding material was obtained. At this time, the decarburization was superior when the heating temperature was higher and the treating time was longer. In the above conditions, the carbon decreased to 0.027 wt.%, which was substantially negligible.

In order to brighten the fiber surface, the cloth was heated in AX gas atmosphere for 20 minutes at 1150 deg. C. The voids of the obtained nonwoven cloth were 97.2%, and the strength was a sufficiently satisfactory 3.5 kg (2 cm width). At this time, the fiber bonding strength was about 0.9 to 1.4D.

Example 3

Carbon fibers of fiber diameter of 13 $\mu$m and length of 15 mm were bonded with epoxy resin in the same manner as in Example 1 to prepare a nonwoven cloth, which was coated with nickel in a thickness of 4.5 $\mu$m, thereby forming a nonwoven cloth made of composite fibers with the loadings of 550 g/dm$^2$. The coating method was electroplating for 16 minutes at the current density of 2.20 A/m$^2$.

Afterwards, washing in water and sintering were conducted in AX gas atmosphere for 20 minutes at 900 deg. C, and the sample was slightly pressurized, and a product with thickness of 1.5 mm and voids of 92% was obtained.

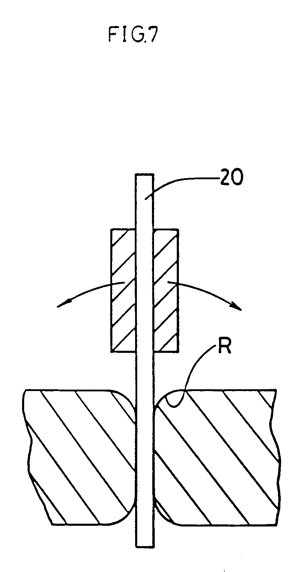

In the test, a test piece cut in a size of 2 x 8 cm was presented for tensile test and bending test. In bending test, as shown in Fig. 7, 20 test pieces were placed in the bending test machine, and 180-degree bending was repeated five times, and the subsequent tensile breakdown load was measured.

The bending radius R of the bending test machine was 5 mm.

Example 4

The nonwoven cloth of compound fibers obtained in Example 3 was further charged into 1150 deg. C propane fuel gas furnace to decarburized for 30 minutes, and Sample 4 as fabricated. The carbon in fibers was almost completely eliminated, and cavities were formed inside. As a result of analysis of the fibers at this time, the residual carbon content was 0.008%. Results of similar tensile test and bending test are shown in Table 1.

Example 5

The core material nonwoven cloth (dimensions: 200 x 300 mm) obtained in Example 1 was plated with copper, and the following batch process was conducted in order to obtain copper fiber nonwoven cloth.

The plating bath was filled with a plating solution (pH 8.5) containing 63 to 105 g/liter of copper pyrophosphate, 240 to 470 g/liter of potassium pyrophosphate, 2 to 6 g/liter of ammonia water and 2 to 16 g/liter of potassium nitrate, and the plating was conducted for 15 minutes at 100 A. By further annealing for 10 minutes at 500 deg. C, a nonwoven cloth of thickness of 2 mm, loadings of 550 g/m$^2$ and voids of 95.7% was obtained, and the fiber diameter was 22 $\mu$m and plating thickness was 4.5 $\mu$m at this time. The junction at the fiber bonding portion had a bonding length of L = 0.7 to 1.3D, and the surface was smooth without notch. The tensile strength of this sample was 2.5 kg (2 cm width).

Example 6

As core material fibers, mixed spun fibers of nylon, rayon and polyester (fiber diameter 19 $\mu$m) were used, and they were bonded to a nonwoven cloth of 2 mm in thickness with epoxy resin, and the nonwoven cloth was provided with conductivity by electroless plating. The process consisted of degreasing, neutralization, and sensitization, and a conductive layer of about 0.7 $\mu$m was formed on the fiber surface. By nickel electroplating method, a nonwoven cloth with fiber diameter of 26.6 $\mu$m (plating thickness 3.8 $\mu$m) was obtained.

After the decarburizing process at 100 deg. C for 20 minutes, a product (hollow fiber product) with thickness of 1 mm, voids of 94.4% and loadings of 500 g/m$^2$ was obtained.

The length L of the bonding portion was 0.7 to 1.3D, and the tensile strength was 3.1 kg (2 cm sample width).

Comparison 1

A carbon fiber nonwoven cloth (unbonded) with fiber diameter of 13 $\mu$m, length of 15 mm, thickness of 1.2 mm and loadings of 50 g/m$^2$ was used as the material, and was plated with nickel in the same manner as in the preceding Examples, and a nonwoven cloth of hollow fibers was obtained. At this time, the plating thickness was 4.5 $\mu$m, and the fiber diameter was 22 $\mu$m, and the obtained nonwoven cloth had loadings of

500 g/m$^2$ and voids of 95.3%. However, since the fibers were mutually bonded in almost point contact of 0.7D or less, and the tensile strength was very low at 1.0 kg. In the bending test, the tensile tear load after repeating 180-degree bending was measured, and the values was further reduced to half, 0.4 kg.

Comparison 2

About 3 g of chop composed of carbon fibers of fiber width of 13 $\mu$m and length of 6 mm was treated by barrel plating with nickel in the condition of 10 A and 45 minutes.

The obtained fibers were large in the discrepancy of diameter, and the average was 16 $\mu$m, and it was found that the fibers could not be diffused by further plating by barrel plating. The fibers were diffused in nonwoven cloth state by paper-making technique, and a nonwoven cloth made of nickel-plated carbon fibers of 195 g/m$^2$ was obtained, and four pieces were laminated to make up loadings of 780 g/m$^2$. Afterwards, through the process of sintering, decarburizing and reducing, a final nonwoven cloth of thickness of 1.2 mm and loadings of 500 g/m$^2$ was obtained. Even in this method, since the sintering process was applied, the bonding length was only 0.7D or less, and the strength was 0.5 kg, which was not satisfactory.

The obtained performances of Examples and Comparisons are summed up in Table 1.

Table 1

| Sample No. | Sample 1 (Example 1) | Sample 2 (Example 2) | Sample 3 (Example 3) | Sample 4 (Example 4) | Sample 5 (Example 5) | Sample 6 (Example 6) | Sample 7 (Comparison 1) | Sample 8 (Comparison 2) |
|---|---|---|---|---|---|---|---|---|
| Core fiber | Carbon fiber | Carbon fiber | Carbon fiber | Carbon fiber | Carbon fiber | Organic mixed spun fiber | Carbon fiber | Carbon fiber |
| Fiber dia. ($\mu$m) | 13 | 13 | 13 | 13 | 13 | 19 | 13 | 13 |
| Fiber length (mm) | 6 | 6 | 15 | 15 | 15 | 15 | 15 | 6 |
| Metal coating material | Nickel | Nickel | Nickel | Nickel | Copper | Nickel | Nickel | Nickel |
| Coating thickness ($\mu$m) | 4.5 | 4.5 | 4.5 | 4.5 | 4.5 | 3.8 | 4.5 | 1.5 |
| Compound fiber dia.D ($\mu$m) | 22 | 22 | 22 | 22 | 22 | 26.6 | 22 | 16 |
| Core material | Provided | Not provided | Provided | Not provided | Provided | Not provided | Not provided | Not provided |
| Fiber bond length L | 0.7~1.3 | 0.9~1.4 | 1.0~1.5 | 1.0~1.5 | 0.7~1.3 | 0.7~1.3 | Less than 0.7 | Less than 0.7 |
| Nonwoven cloth loadings (g/m$^2$) | 550 | 500 | 550 | 500 | 550 | 500 | 500 | 500 |
| Tensile test (kg) | 3.5 | 3.4 | 5.9 | 4.2 | 2.5 | 3.1 | 1.0 | 0.5 |
| Bending test (Note 1) | | | 4.0 | 2.9 | | | 0.4 | |
| Voids (%) | 95.7 | 97.2 | 92 | 94.0 | 95.7 | 94.4 | 95.3 | 94.4 |

Note 1: Bending test is indicated by tensile tear load (kg) after repeating 180-degree bending.

11

EP 0 404 961 B1

**Claims**

1. A nonwoven cloth made of metallic fibers comprising a plurality of metallic fibers, each said metallic fiber having a hollow part extending therethrough, wherein the outer circumference of said metallic fibers being substantially smooth, the mean diameter (D) of said metallic fibers being 50 $\mu$m or less, and the thickness (T) of said metallic fibers being 0,05 to 0,4 times the mean diameter (D) of the metallic fibers,
said metallic fibers being mutually bonded by metallic bonding portions made of the same metallic material as said metallic fibers, the outer surface of said metallic bonding portions being smoothly curved arc-shaped and the-length of the metallic bonding portions being 0,7 to 2 times said mean diameter (D) of said metallic fibers,
said metallic fibers having communicating portions which communicate between the hollow parts of the metallic fibers, where said metallic fibers are intersecting, and
the carbon content of said nonwoven cloth made of metallic fibers being 0,1 weight % or less.

2. The nonwoven cloth according to claim 1 wherein the metallic fibers are nickel fibers.

3. The nonwoven cloth according to claim 1 or 2, wherein the mean diameter (D) of said metallic fibers is in the range of from 10 to 30 $\mu$m and said thickness (T) is in the range of from 3 to 7 $\mu$m.

4. A method of making a nonwoven metallic fiber cloth, comprising the steps of
bonding carbon fibers mutually by a bonding agent to form a nonwoven carbon fiber cloth having a plurality of bonding points at which the adjacent carbon fibers are mutually bonded by the bonding agent, said carbon fibers having a mean diameter in the range of not more than 40 $\mu$m,
providing electrical conductivity for at least the surface of the bonding agent at each of said bonding points,
electroplating the nonwoven carbon fiber cloth with a metal to form a metallic layer on the surface of each said carbon fiber inclusive of the surface of the bonding agent at each bonding point to thereby form a nonwoven metallic-coated carbon fiber cloth in which
the mean diameter (D) of the metallic-coated carbon fibers is not more than 50 $\mu$m, the thickness of the metallic layers is in the range of from 0,05 to 0,4 times said mean diameter (D), and the outer metallic surfaces of the adjacent fibers are mutually connected at each bonding point by the smoothly curved metallic surface of the bonding point, and
reducing the carbon content of said nonwoven metallic-coated carbon fiber cloth to not more than 0,1 weight% by heating said nonwoven metallic-coated carbon fiber cloth in air or alternatively in an oxidizing gas atmosphere to form the nonwoven cloth of mutually bonded tubelike metallic fibers.

5. The method according to claim 4, wherein said metal is nickel.

6. The method according to claim 4 or 5, wherein said bonding agent is made of at least one resin selected from the group consisting of epoxy resin, PVA resin and polyester resin.

7. The method according to any of claims 4 to 6, wherein said method further comprises a step of annealing the non-woven cloth of mutually bonded tubelike metallic fibers in a reducing atmosphere.

**Patentansprüche**

1. Vliesstoff aus Metallfasern, bestehend aus einer Vielzahl von Metallfasern, von denen jede Metallfaser einen sich durch das Innere der Faser erstreckenden Hohlteil aufweist, wobei der äußere Umfang der Metallfasern im wesentlichen glatt ist, der mittlere Durchmesser (D) der Metallfasern beträgt 50 $\mu$m oder Weniger, und die Dicke (T) der Metallfasern beträgt das 0,05- bis 0,4-fache des mittleren Durchmessers (D) der Metallfasern,
die Metallfasern sind untereinander durch metallische Bindungsabschnitte gebunden, die aus dem gleichen metallischen Material bestehen wie die Metallfasern, wobei die äußere Oberfläche der metallischen Bindungsabschnitte glatt, gekrümmt, bogenförmig ist, und die Länge der metallischen Bindungsabschnitte das 0,7- bis 2-fache des mittleren Durchmessers (D) der Metallfasern beträgt, und
die Metallfasern haben verbindende Abschnitte, mit denen die hohlen Teile der Metallfasern dort miteinander in Verbindung stehen, wo sich die Metallfasern kreuzen, und

12

der Kohlenstoffgehalt des Vliesstoffes aus Metallfasern beträgt 0,1 Gewichts-% oder weniger.

2. Vliesstoff nach Anspruch 1, worin die Metallfasern Nickelfasern sind.

3. Vliesstoff nach Anspruch 1 oder 2, worin der mittlere Durchmesser (D) der Metallfasern im Bereich von 10 bis 30 $\mu$m liegt, und die Dicke (T) liegt im Bereich von 3 bis 7 $\mu$m.

4. Verfahren zur Herstellung eines Vliesstoffes aus Metallfasern, das die Stufen umfaßt
Bindung von Kohlenstoffasern untereinander durch ein Bindungsmittel, um einen Kohlenstoffaser-Vliesstoff mit einer Vielzahl von Bindungspunkten zu erhalten, an dem die benachbarten Kohlenstoffasern untereinander durch das Bindungsmittel gebunden sind, wobei die Kohlenstoffasern einen mittleren Durchmesser im Bereich von nicht mehr als 40 $\mu$m haben,
Vorsehen einer elektrischen Leitfähigkeit für wenigstens die Oberfläche des Bindungsmittels an jedem der Bindungspunkte,
Elektroplattierung des Kohlenstoffaser-Vliesstoffes mit einem Metall, um eine Metallschicht auf der Oberfläche der Kohlenstoffaser einschließlich der Oberfläche des Bindungsmittels an jedem Bindungspunkt zu bilden, um dadurch einen Metall-beschichteten Kohlenstoffaser-Vliesstoff zu erhalten, in dem der mittlere Durchmesser (D) der Metall-beschichteten Kohlenstofffasern nicht mehr als 50 $\mu$m beträgt, die Dicke der Metallschichten liegt im Bereich vom 0,05- bis 0,4-fachen des mittleren Durchmessers (D), und die äußeren Metalloberflächen der benachbarten Fasern sind untereinander an jedem Bindungspunkt durch die glatte, gekrümmte Metalloberfläche des Bindungspunktes verbunden, und
Verringerung des Kohlenstoffgehaltes des Metall-beschichteten Kohlenstoffaser-Vliesstoffes auf nicht mehr als 0,1 Gewichts-% durch Erhitzen des Metall-beschichteten Kohlenstoffaser-Vliesstoffes in Luft oder alternativ in einer oxidierenden Gasatmosphäre, um einen Vliesstoff aus untereinander verbundenen, röhrenförmigen metallischen Fasern zu bilden.

5. Verfahren nach Anspruch 4, worin das Metall Nickel ist.

6. Verfahren nach Anspruch 4 oder 5, worin das Bindungsmittel aus wenigstens einem Harz besteht, ausgewählt aus der Gruppe, die aus Epoxidharz, PVA-Harz und Polyesterharz besteht.

7. Verfahren nach einem der Ansprüche 4 bis 6, worin das Verfahren weiterhin die Stufe des Glühens des Vliesstoffes mit untereinander verbundenen, röhrenförmigen Metallfasern in einer reduzierenden Atmosphäre umfaßt.

**Revendications**

1. Etoffe non tissée faite de fibres métalliques comprenant une pluralité de fibres métalliques, chacune desdites fibres métalliques présentant une cavité traversante, dans laquelle la circonférence extérieure des fibres métalliques est sensiblement lisse, le diamètre moyen (D) desdites fibres métalliques étant de 50 $\mu$m ou moins et l'épaisseur (T) desdites fibres métalliques étant de 0,05 à 0,4 fois le diamètre moyen (D) des fibres métalliques,
lesdites fibres métalliques étant liées entre elles par des parties de liaison métalliques faites de la même matière métallique que lesdites fibres métalliques, la surface extérieure desdites parties de liaison métalliques étant arrondie en arc à grand rayon et la longueur des parties de liaison métalliques étant de 0,7 à 2 fois le diamètre moyen (D) desdites fibres métalliques,
lesdites fibres métalliques possédant des parties communicantes qui font communiquer les cavités des fibres métalliques aux endroits où lesdites fibres métalliques se croisent, et
la teneur en carbone de ladite étoffe non tissée faite de fibres métalliques étant de 0,1 % en poids ou moins.

2. Etoffe non tissée selon la revendication 1, dans laquelle les fibres métalliques sont des fibres de nickel.

3. Etoffe non tissée selon la revendication 1 ou 2, dans laquelle le diamètre moyen (D) desdites fibres métallique est dans l'intervalle de 10 à 30 $\mu$m et ladite épaisseur (T) est dans l'intervalle de 3 à 7 $\mu$m.

4. Procédé de fabrication d'une étoffe non tissée en fibres métalliques, comprenant les phases consistant à :

lier des fibres de carbone entre elles par un agent liant pour former une étoffe non tissée de fibres de carbone ayant une pluralité de points de liaison où les fibres de carbone adjacentes sont liées entre elles par l'agent liant, lesdites fibres de carbone ayant un diamètre moyen de l'ordre de pas plus de 40 $\mu$m ;

conférer de la conductibilité électrique au moins à la surface de l'agent liant à chacun desdits points de liaison,

métalliser l'étoffe non tissée en fibres de carbone par galvanoplastie pour former une couche métallique sur la surface de chacune desdites fibres de carbone, y compris sur la surface de l'agent liant à chaque point de liaison, pour former ainsi une étoffe non tissée de fibres de carbone métallisées, dans laquelle

le diamètre moyen (D) des fibres de carbone métallisées n'est pas supérieur à 50 $\mu$m, l'épaisseur des couches métalliques est dans l'intervalle de 0,05 à 0,4 fois ledit diamètre moyen (D), et les surfaces métalliques extérieures des fibres adjacentes sont assemblées entre elles à chaque point de liaison par la surface métallique du point de liaison qui est arrondie à grand rayon, et

réduire la teneur en carbone de ladite étoffe non tissée en fibres de carbone métallisées à pas plus de 0,1 % en poids en chauffant ladite étoffe non tissée en fibres de carbone métallisées dans l'air ou, en variante, dans une atmosphère de gaz oxydant pour former l'étoffe non tissée de fibres métalliques tubulaires liées entre elles.

5. Procédé selon la revendication 4, dans lequel ledit métal est le nickel.

6. Procédé selon la revendication 4 ou 5, dans lequel ledit agent liant est fait d'au moins une résine choisie dans le groupe composé des résines époxy, PVA et polyester.

7. Procédé selon une quelconque des revendications 4 à 6, dans lequel ledit procédé comprend en outre une phase de recuit de l'étoffe non tissée de fibres métalliques tubulaires liées entre elles dans une atmosphère réductrice.

FIG.2

FIG.3(a)

FIG.3(b)

## FIG.4(a)

## FIG.4(b)

FIG.5

FIG.6

FIG.7

FIG.8

FIG.9